# EUROPÄISCHE PATENTSCHRIFT

(11) **EP 2 442 945 B1**
(45) Veröffentlichungstag und Bekanntmachung des Hinweises auf die Patenterteilung: **24.09.2014**
(21) Anmeldenummer: 10718451.7
(22) Anmeldetag: 07.04.2010
(51) Int. Cl.: B25B 5/10, B25B 5/16

(54) **ANSCHLAGSCHRAUBE MIT EINEM ANSCHLAGPUFFERTEIL**
STOP SCREW HAVING A STOP BUFFER PART
VIS DE BUTÉE PRÉSENTANT UNE PARTIE TAMPON DE BUTÉE

(30) Priorität: 18.06.2009 DE 202009004931 U
(43) Veröffentlichungstag der Anmeldung: 25.04.2012
(73) Patentinhaber: Erwin Halder KG, 88480 Achstetten-Bronnen (DE)
(72) Erfinder: HALDER, Stefan, 88480 Achstetten-Bronnen (DE)
(74) Vertreter: Hentrich, Swen
(86) Internationale Anmeldenummer: PCT/DE2010/075033
(87) Internationale Veröffentlichungsnummer: WO 2010/145647

(56) Entgegenhaltungen:
- EP-A1- 0 461 994
- DE-U1- 20 212 656
- US-A- 2 190 585
- US-A- 4 850 630

## Beschreibung

Die vorliegende Erfindung betrifft eine Anschlagschraube mit einem Anschlagpufferteil. Insbesondere betrifft die vorliegende Erfindung eine Anschlagschraube mit einem Anschlagpufferteil, das eine gelenkige Verbindung mit der Anschlagschraube aufweist.

Herkömmliche Anschlagschrauben mit einem Anschlagpufferteil weisen den Nachteil auf, dass sie unter fortgesetzten Beanspruchungen frühzeitig Fehlfunktionen zeigen. Insbesondere für den Einsatz und die Verwendung in Flugzeugen ist jedoch der Gesichtspunkt der Lebensdauer und der Langzeitstabilität von entscheidender Bedeutung.

Eine Anschlagschraube mit Anschlagpufferteil ist beispielsweise in der US 4,850,630 offenbart. Diese Druckschrift zeigt eine Anschlagschraube mit einem Anschlagpufferteil, welche eine gelenkige Verbindung ausbilden. Bei der Anschlagschraube erscheint jedoch nachteilhaft, dass sich ihre Gewindeverbindung sehr leicht lösen lässt, also keine zusätzliche Sicherung für die Anschlagschraube vorgesehen ist.

Es ist daher eine Aufgabe der vorliegenden Erfindungen eine Kombination einer Anschlagschraube mit einem Anschlagpufferteil gemäß dem Oberbegriff des Anspruchs 1, sowie eine Kombination einer Anschlagschraube und einem Anschlagpufferteil mit einem Anschlussteil für die Anschlagschraube bereitzustellen, welche eine sichere Anlage eines an dem Anschlagpufferteil angeordneten Bauteils gewährleistet und welche eine zusätzliche Sicherung der Gewindeverbindung bieten.

Diese Aufgabe wird bei einer Kombination einer Anschlagschraube mit einem Anschlagpufferteil durch den Merkmalsbestand des Anspruchs 1 gelöst. Diese Ausgestaltung weist den Vorteil auf, dass der Schwenkwinkel durch die Anlageflächen begrenzt werden und die Anschlagschraube mit dem Anschlagpufferteil materialschonend in die Ausgangsposition zurückgebracht werden kann. Günstig ist es, wenn der im Wesentlichen kugelförmige Vorsprung in die Anschlagschraube spielfrei montiert ist, so dass eine Abdichtung zwischen Anschlagpufferteil und Anschlagschraube bewirkt wird.

Als vorteilhaft hat es sich erwiesen, wenn die Schraubenanlagefläche und die Anschlagpufferteilanlagefläche ringförmig ausgestaltet sind.

Bevorzugt ist zwischen einem Halsbereich des im Wesentlichen kugelförmigen Vorsprungs des Anschlagpufferteils und der Anschlagschraube ein Dichtungsring angeordnet, wodurch eine Rückstellung des Anschlagpufferteils bewirkt werden kann.

Als günstig hat es sich erwiesen, dass die Anschlagschraube erfindungsgemäß eine Federaufnahmeaussparung aufweist, in der ein Federelement angeordnet ist, denn dadurch kann sowohl eine Rückstellung des Anschlagpufferteils als auch eine Dämpfung bewirkt werden.

Besonders vorteilhaft ist es, wenn das Federelement Variationen in der Wickelung aufweist, so dass ein Ausgleich der lokalen Belastung, insbesondere der lateralen Belastung erfolgen kann.

Erfindungsgemäß weist der kugelförmige Vorsprung eine Kugelaufnahme für eine innere Kugel auf, wobei das Federelement an der inneren Kugel anliegt. Diese Ausgestaltung weist den Vorteil auf, dass eine definierte Verformung des Federelementes in axialer Richtung genauer bestimmt werden kann.

Weiterhin weist erfindungsgemäß die Anschlagschraube einen verschiebbaren Stößel mit einem Federhalter für das Federelement und mindestens eine Rastkugel auf, wobei an dem verschiebbaren Stößel entsprechend mindestens eine Ausnehmung für die mindestens eine Rastkugel so ausgebildet ist, dass die Rastkugel aus einer eine Einrastung der Stiftanordnung ermöglichenden Raststellung in eine eine Lösung der Stiftanordnung ermöglichende Lösestellung gebracht werden können. Die Ausgestaltung mit dem Federhalter weist den Vorteil auf, dass das Federelement in zweifacher Hinsicht genutzt werden kann, und die Ausgestaltung mit den Rastkugeln und den Ausnehmungen weist den Vorteil auf, dass die Anschlagschraube besonders sicher festgestellt werden kann.

Bevorzugt ist ein zylinderförmiger Kugelsitz um die innere Kugel angeordnet. Diese Ausgestaltung weist die Vorteile auf, dass die innere Kugel kleiner dimensioniert werden kann und die Verwendung eines stärker belastbaren Materials für den zylinderförmigen Kugelsitz die Gesamtstabilität der Anordnung erhöht werden kann. Weiterhin wird ein Sicherheitsgewinn erreicht, da eine einseitige Beladung von links möglich ist.

Als vorteilhaft hat es sich erwiesen, wenn der verschiebbare Stößel und/oder der zylinderförmige Kugelsitz aus einem Material gebildet worden sind, das eine höhere mechanische Belastbarkeit als das Material aufweist, aus dem die Anschlagschraube und/oder der kugelförmige Vorsprung gebildet worden sind.

Als günstig hat es sich erwiesen, wenn der verschiebbare Stößel und/oder das Federaufnahmeteil aus einem Material gebildet worden sind, das eine höhere mechanische Belastbarkeit als das Material aufweist, aus dem die Anschlagschraube und/oder der kugelförmige Vorsprung gebildet worden sind.

Besonders bevorzugt ist es, wenn der verschiebbare Stößel einen Zapfen aufweist.

Weiterhin können die Rastkugeln in der Raststellung an der Außenseite des verschiebbaren Stößels anliegen, wobei die Außenseite mit einer geringen Steigung konisch ausgestaltet ist, wodurch das Spiel eliminiert wird und eine Nachspannungsreserve bereit gestellt wird.

Bei einer vorteilhaften Ausgestaltung weist die Anschlagschraube ein einstückiges Abschlussteil auf. Auf diese Weise kann die Sicherheit erhöht werden, da eine einseitige Beladung ermöglicht wird.

Ein weiterer Gesichtspunkt der vorliegenden Erfindung betrifft die Kombination einer erfindungsgemäßen Anschlagschraube mit einem Anschlussteil für diese Anschlagschraube, bei der das Anschlussteil mindestens eine Rastaufnahme für die mindestens eine Rastkugel aufweist.

Im Folgenden wird die Erfindung an in der Zeichnung dargestellten Ausführungsbeispielen näher erläutert; es zeigen:
- Fig. 1: eine schematische Darstellung im Querschnitt für ein erstes Ausführungspiel einer nicht zur Erfindung gehörenden Anschlagschraube mit einem Anschlagpufferteil,
- Fig. 2: eine schematische Darstellung im Querschnitt für ein zweites Ausführungspiel einer nicht zur Erfindung gehörenden Anschlagschraube mit einem Anschlagpufferteil,
- Fig. 3: eine schematische Darstellung im Querschnitt für ein drittes Ausführungspiel einer nicht zur Erfindung gehörenden Anschlagschraube mit einem Anschlagpufferteil,
- Fig. 4: eine schematische Darstellung im Querschnitt für ein viertes Ausführungspiel einer nicht zur Erfindung gehörenden Anschlagschraube mit einem Anschlagpufferteil,
- Fig. 5: eine schematische Darstellung im Querschnitt für ein fünftes Ausführungspiel einer erfindungsgemäßen Anschlagschraube mit einem Anschlagpufferteil,
- Fig. 6: eine schematische Darstellung im Querschnitt für ein sechstes Ausführungspiel einer nicht zur Erfindung gehörenden Anschlagschraube mit einem Anschlagpufferteil,
- Fig. 7: eine schematische Darstellung im Querschnitt für ein siebtes Ausführungspiel einer erfindungsgemäßen Anschlagschraube mit einem Anschlagpufferteil,
- Fig. 8: eine Seitenansicht einer Anschlagschraube nach dem siebten Ausführungspiel,
- Fig. 9: eine Draufsicht auf eine Anschlagschraube nach dem siebten Ausführungspiel,
- Fig. 10: eine schematische Ansicht eines Anschlussteils für die Anschlagschraube in perspektivischer Darstellung,
- Fig. 11: eine schematische Querschnittsdarstellung des Anschlussteils für die Anschlagschraube und
- Fig. 12: eine Seitenansicht des Anschlussteils für die Anschlagschraube.

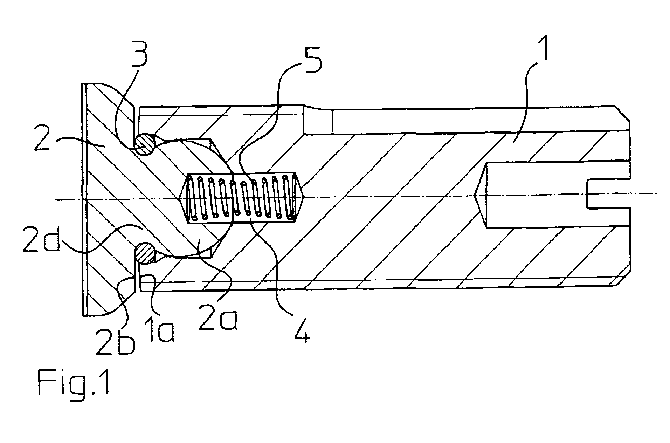

Fig. 1 zeigt eine schematische Darstellung im Querschnitt für ein erstes Ausführungspiel einer nicht zur Erfindung gehörenden Anschlagschraube 1 mit einem Anschlagpufferteil 2. In der Anschlagschraube 1 ist eine Aussparung ausgebildet, um mit einem im Wesentlichen kugelförmigen Vorsprung 2a des Anschlagpufferteils 2 eine gelenkige Verbindung zu bilden. Die Auslenkung zwischen der Anschlagschraube 1 und dem Anschlagpufferteil 2 wird durch eine Schraubenanlagefläche 1a und eine auf dem Anschlagpufferteil 2 gegenüber liegende Anschlagpufferteilanlagefläche 2b begrenzt. In einer Federaufnahmeaussparung 4, die sich in dem ersten Ausführungsbeispiel über einen Bereich der Anschlagschraube 1 und des im Wesentlichen kugelförmigen Vorsprungs 2a erstreckt, ist ein Federelement 5 angeordnet, wobei in diesem Ausführungspiel die Federwicklungen über der Länge des Federelementes 5 variieren. Zwischen einem Halsbereich 2d des im Wesentlichen kugelförmigen Vorsprungs 2a und der Anschlagschraube 1 ist ein Dichtungsring 3 angeordnet.

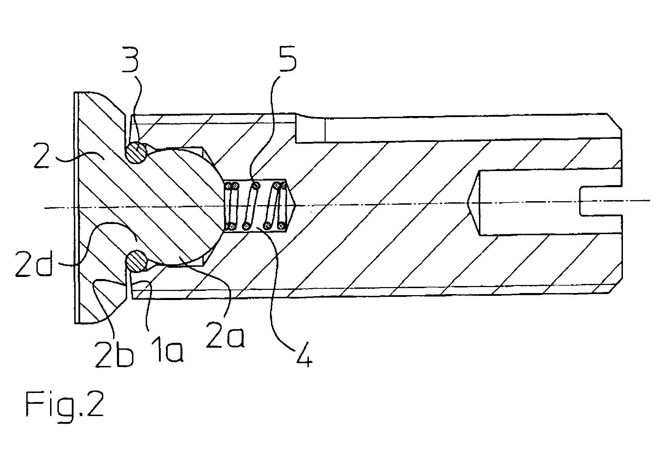

Fig. 2 zeigt eine schematische Darstellung im Querschnitt für ein zweites Ausführungspiel einer nicht zur Erfindung gehörenden Anschlagschraube 1 mit dem Anschlagpufferteil 2. Im Unterschied zu dem in Fig. 1 dargestellten ersten Ausführungsbeispiel erstreckt sich die Federaufnahmeaussparung 4 ausschließlich in der Anschlagschraube 1 und ist die Kugelform des Vorsprungs 2a nur abgeschrägt, so dass auf einer Vorsprungsabschrägung 2e das Federelement 5 anliegt.

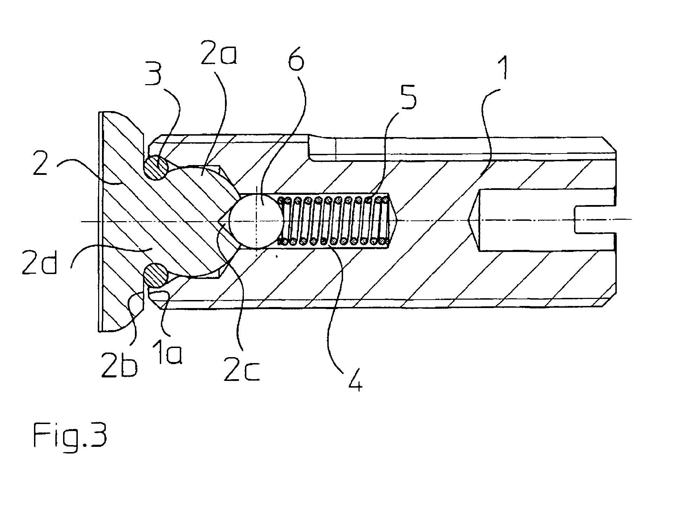

Fig. 3 zeigt eine schematische Darstellung im Querschnitt für ein drittes Ausführungspiel einer nicht zur Erfindung gehörenden Anschlagschraube 1 mit dem Anschlagpufferteil 2. Im Unterschied zu den in Fig. 1 und Fig. 2 dargestellten Ausführungsbeispielen weist der im Wesentlichen kugelförmige Vorsprung 2a eine Kugelaufnahme 2c auf, an dem eine innere Kugel 6 anliegt, die zwischen Federelement 5 und kugelförmigen Vorsprung 2a angeordnet ist.

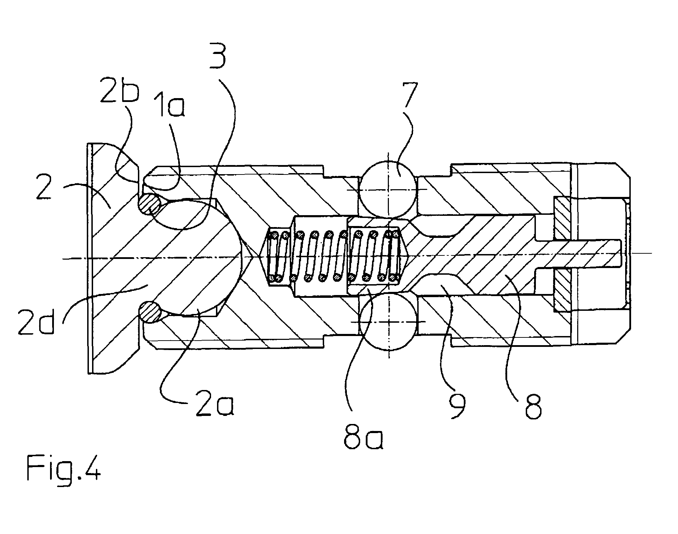

Fig. 4 zeigt eine schematische Darstellung im Querschnitt für ein viertes Ausführungspiel einer nicht zur Erfindung gehörenden Anschlagschraube 1 mit dem Anschlagpufferteil 2. Im Unterschied zu den in Fig. 1 und Fig. 2 dargestellten Ausführungsbeispielen weist die Anschlagschraube 1 zusätzlich einen verschiebbaren Stößel 8 mit einem Federhalter 8a auf, der die eine Seite des Federelements 5 aufnimmt. Zusätzlich weist diese Anschlagschraube 1 mindestens eine Rastkugel 7 auf, die in Raststellung auf der Außenseite des Federhalters 8a anliegt. Zur Lösung kann die Rastkugel 7 in eine entsprechende Ausnehmungen 9 des verschiebbaren Stößels 8 gebracht werden. Ferner ist für dieses Ausführungsbeispiel ein Zapfen 12 gezeigt.

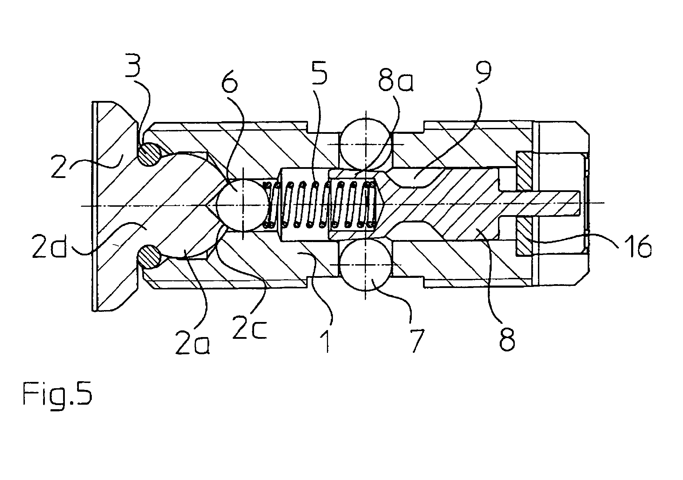

Fig. 5 zeigt eine schematische Darstellung im Querschnitt für ein fünftes Ausführungspiel der Anschlagschraube 1 mit dem Anschlagpufferteil 2. Das fünfte Ausführungsbeispiel entspricht einer Kombination des vierten Ausführungsbeispiels mit dem dritten Ausführungsbeispiel. Zusätzlich zu den in der Fig. 4 dargestellten Merkmalen weist der im Wesentlichen kugelförmige Vorsprung 2a eine Lagerkugelaufnahme 2c für eine innere Lagerkugel 6 auf, an die das andere Ende des Federelements 5 anliegt. Weiterhin ist aus der Fig. 5 zu erkennen, das der Abschluss durch ein separates Abschlussteil 16 gebildet werden kann.

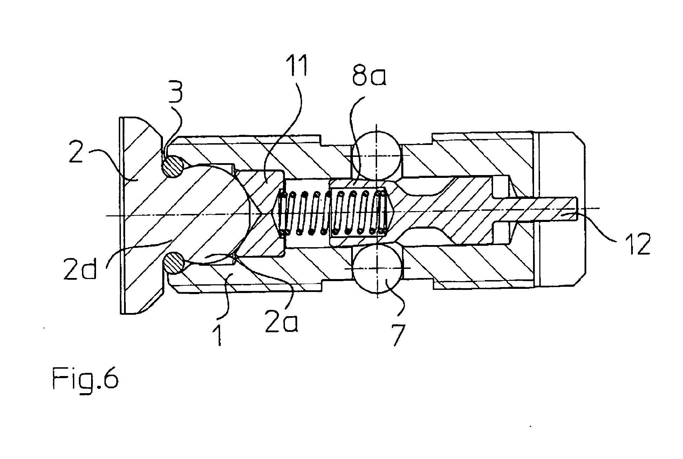

Fig. 6 zeigt eine schematische Darstellung im Querschnitt für ein sechstes Ausführungspiel einer nicht zur Erfindung gehörenden Anschlagschraube 1 mit dem Anschlagpufferteil 2. Anstelle der Lagerkugel 6 nach dem fünften Ausführungsbeispiel ist zur Aufnahme des anderen Endes des Federelementes 5 ein Federaufnahmeteil 11 zwischen dem Federelement 5 und dem im Wesentlichen kugelförmigen Vorsprung 2a angeordnet.

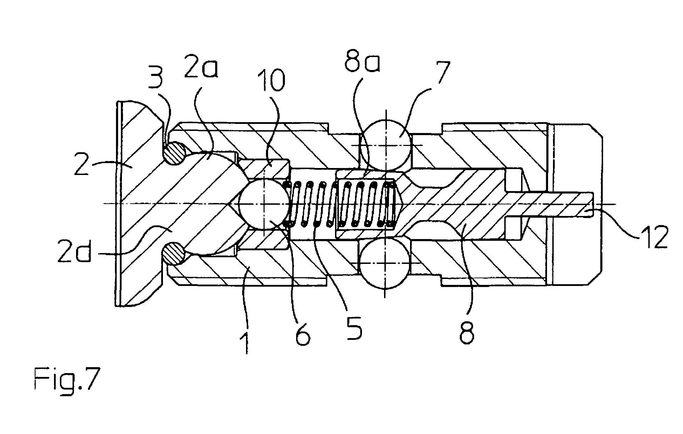

Fig. 7 zeigt eine schematische Darstellung im Querschnitt für ein siebtes Ausführungspiel der Anschlagschraube 1 mit dem Anschlagpufferteil 2, wobei das siebte Ausführungsbeispiel eine Abänderung des fünften Ausführungsbeispiels ist, indem die innere Lagerkugel 6 mit einem zylinderförmigen Kugelsitz 10 umgeben worden ist.

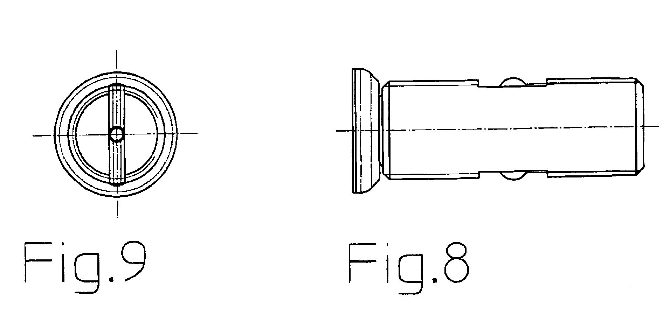

Zum besseren Verständnis der Erfindung ist Fig. 8 eine Seitenansicht einer erfindungsgemäßen Anschlagschraube 1 und in Fig. 9 eine Draufsicht auf eine erfindungsgemäße Anschlagschraube 1 gezeigt.

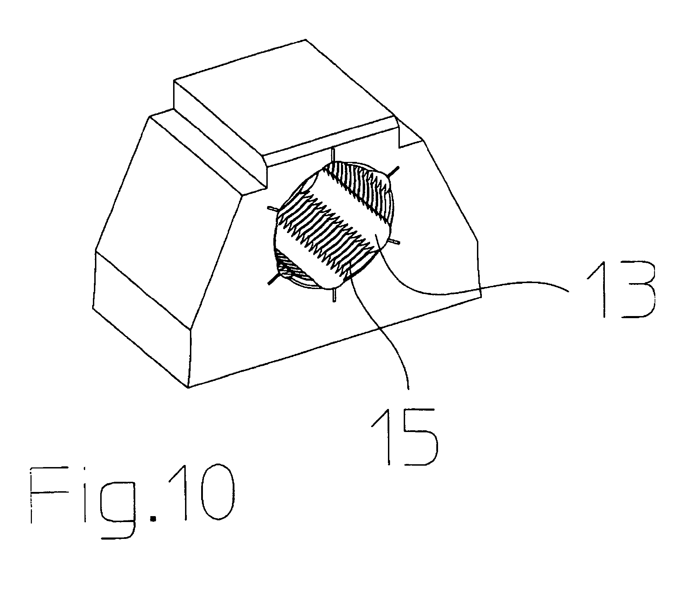

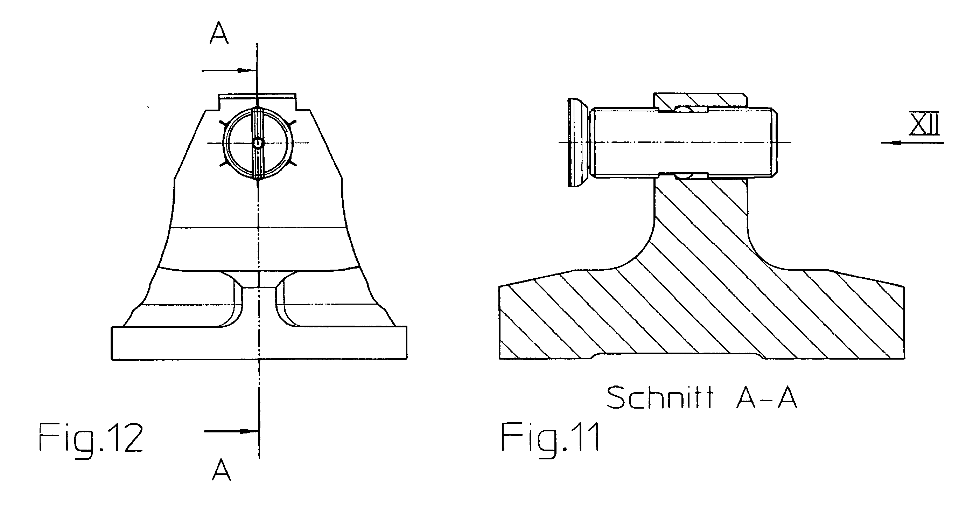

Fig. 10 zeigt eine schematische Ansicht eines Anschlussteils 14 für die Anschlagschraube 1 in perspektivischer Darstellung. Im Anschlussteil 14 sind Rastaufnahmen 13 für die Rastkugeln 7 zu erkennen. Fig. 11 zeigt eine schematische Querschnittsdarstellung des Anschlussteils 14 mit eingebrachter Anschlagschraube 1 mit Anschlagpufferteil 2, wobei der nicht unterbrochene Gewindebereich 15 als ein Schutz vor Verschmutzungen dienen kann. Schließlich zeigt Fig. 12 eine Seitenansicht des Anschlussteils 14 für die Anschlagschraube 1, wobei dieses Ausführungsbeispiel sechs Rastaufnahmen 13 aufweist.

### Bezugszeichenliste

- 1: Anschlagschraube
- 1a: Schraubenanlagefläche
- 2: Anschlagpufferteil
- 2a: im Wesentlichen kugelförmiger Vorsprung
- 2b: Anschlagpufferteilanlagefläche
- 2c: Lagerkugelaufnahme
- 2d: Halsbereich des Vorsprungs
- 2e: Vorsprungsabschrägung
- 3: Dichtungsring
- 4: Federaufnahmeaussparung
- 5: Federelement
- 6: innere Kugel
- 7: Rastkugel
- 8: verschiebbarer Stößel
- 9: Ausnehmung
- 10: zylinderförmiger Kugelsitz
- 11: Federaufnahmeteil
- 12: Zapfen
- 13: Rastaufnahme für Rastkugeln
- 14: Anschlussteil für die Anschlagschraube
- 15: Gewindebereich
- 16: Abschlussteil

## Patentansprüche

1. Kombination einer Anschlagschraube (1) mit einem Anschlagpufferteil (2), das an einem der Anschlagschraube (2) gegenüber liegenden Bereich einen im Wesentlichen kugelförmigen Vorsprung (2a) aufweist, die Anschlagschraube (1) aufweisend an einem dem Anschlagpufferteil (2) gegenüber liegenden Bereich eine Aussparung zur Aufnahme des im Wesentlichen kugelförmigen Vorsprungs (2a) des Anschlagpufferteils (2), um eine gelenkige Verbindung zwischen der Anschlagschraube (1) und dem Anschlagpufferteil (2) zu bilden, wobei zur Begrenzung der gelenkigen Verbindung zwischen der Anschlagschraube (1) und dem Anschlagpufferteil (2) die Anschlagschraube (2) eine Schraubenanlagefläche (1a) und das Anschlagpufferteil (2) eine der Schraubenanlagefläche (1a) gegenüber liegende Anschlagpufferteilanlagefläche (2b) aufweist, **dadurch gekennzeichnet, dass** die Anschlagschraube (1) eine
Federaufnahmeaussparung (4) aufweist, in der ein Federelement (5) angeordnet ist, dass der kugelförmige Vorsprung (2a) eine Lagerkugelaufnahme (2c) für eine innere Kugel (6) aufweist, wobei das Federelement (5) an der inneren Kugel (6) anliegt, dass die Anschlagschraube (2) einen verschiebbaren Stößel (8) mit einem Federhalter (8a) für das Federelement (5) und mindestens eine Rastkugel (7) aufweist, wobei an dem verschiebbaren Stößel (8) mindestens eine Ausnehmung (9) für die mindestens eine Rastkugel (7) so ausgebildet ist, dass die Rastkugel (7) aus einer eine Einrastung der Stiftanordnung ermöglichenden Raststellung in eine eine Lösung der Stiftanordnung ermöglichende Lösestellung gebracht werden kann und dass das zwischen der inneren Kugel (6) und dem Stößel (8) angeordnete Federelement (5) ein Rückstellelement zur Rückstellung des Anschlagpufferteils (2) bildet.

2. Kombination einer Anschlagschraube (1) mit einem Anschlagpufferteil (2) nach Anspruch 1, **dadurch gekennzeichnet, dass** die Schraubenanlagefläche (1a) und die Anschlagpufferteilanlagefläche (2b) ringförmig ausgestaltet sind.

3. Kombination einer Anschlagschraube (1) mit einem Anschlagpufferteil (2) nach Anspruch 1 oder 2, **dadurch gekennzeichnet, dass** zwischen einem Halsbereich (2d) des im Wesentlichen kugelförmigen Vorsprungs (2a) des Anschlagpufferteils (2) und der Anschlagschraube (1) ein Dichtungsring (3) angeordnet ist.

4. Kombination einer Anschlagschraube (1) mit einem Anschlagpufferteil (2) nach einem der Ansprüche 1 bis 3, **dadurch gekennzeichnet, dass** das Federelement (5) Variationen der Wickelung aufweist.

5. Kombination einer Anschlagschraube (1) mit einem Anschlagpufferteil (2) nach einem der Anspruch 1 bis 4, **dadurch gekennzeichnet, dass** ein zylinderförmiger Kugelsitz (10) um die innere Lagerkugel (6) angeordnet ist.

6. Kombination einer Anschlagschraube (1) mit einem Anschlagpufferteil (2) nach einem der Ansprüche 1 bis 5, **dadurch gekennzeichnet, dass** der verschiebbare Stößel (8) einen Zapfen (12) aufweist.

7. Kombination einer Anschlagschraube (1) mit einem Anschlagpufferteil (2) nach einem der Ansprüche 1 bis 6, **dadurch gekennzeichnet, dass** die Rastkugel (7) in der Raststellung an der Außenseite der Federaufnahme (8) anliegt, wobei die Außenseite mit einer geringen Steigung konisch ausgestaltet ist.

8. Kombination einer Anschlagschraube (1) mit einem Anschlagpufferteil (2) nach einem der Ansprüche 1 bis 7, **dadurch gekennzeichnet, dass** ein einstückiges Abschlussteil 16 an einem von dem Anschlagpufferteil (2) am weitesten beabstandeten Bereich der Anschlagschraube (1) vorgesehen ist.

9. Kombination einer Anschlagschraube (1) und einem Anschlagpufferteil (2) nach einem der vorhergehenden Ansprüche mit einem Anschlussteil (14) für die Anschlagschraube (1), **dadurch gekennzeichnet, dass** das Anschlussteil (14) mindestens eine Rastaufnahme (13) für die mindestens eine Rastkugel (7) aufweist.

## Claims

1. A combination of a stop screw (1) with a stop buffer portion (2) which at a region opposite to the stop screw (1) has a substantially spherical projection (2a), the stop screw (1) at a region opposite the stop buffer portion (2) having a recess for receiving the substantially spherical projection (2a) of the stop buffer portion (2) to form a pivotal connection between the stop screw (1) and the stop buffer portion (2), wherein to limit the pivotal connection between the stop screw (1) and the stop buffer portion (2) the stop screw (1) has a screw contact surface (1a) and the stop buffer portion (2) has a stop buffer portion contact surface (2b) opposite the screw contact surface (1a), **characterised in that** the stop screw (1) has a spring receiving recess (4) in which a spring element (5) is arranged, the spherical projection (2a) has a bearing ball receiving means (2c) for an inner ball (6), wherein the spring element (5) bears against the inner ball (6), the stop screw (2) has a displaceable thrust member (8) with a spring holder (8a) for the spring element (5) and at least one latching ball (7), wherein at least one recess (9) for the at least one latching ball (7) is provided on the displaceable thrust member (8) such that the latching ball (7) can be moved out of a latching position permitting latching engagement of the pin arrangement into a release position permitting release of the pin arrangement, and the spring element (5) arranged between the inner ball (6) and the thrust member (8) forms a resetting element for resetting the stop buffer portion (2).

2. A combination of a stop screw (1) with a stop buffer portion (2) according to claim 1 **characterised in that** the screw contact surface (1a) and the stop buffer portion contact surface (2) are of an annular configuration.

3. A combination of a stop screw (1) with a stop buffer portion (2) according to claim 1 or claim 2 **characterised in that** a sealing ring (3) is arranged between a neck region (2d) of the substantially spherical projection (2a) of the stop buffer portion (2) and the stop screw (1).

4. A combination of a stop screw (1) with a stop buffer portion (2) according to one of claims 1 to 3 **characterised in that** the spring element (5) has variations in the coil.

5. A combination of a stop screw (1) with a stop buffer portion (2) according to one of claims 1 to 4 **characterised in that** a cylindrical ball seat (10) is arranged around the inner bearing ball (6).

6. A combination of a stop screw (1) with a stop buffer portion (2) according to one of claims 1 to 5 **characterised in that** the displaceable thrust member (8) has a peg (12).

7. A combination of a stop screw (1) with a stop buffer portion (2) according to one of claims 1 to 6 **characterised in that** the latching ball (7) in the latching position bears against the outside of the spring receiving means (8), wherein the outside is of a conical configuration with a slight inclination.

8. A combination of a stop screw (1) with a stop buffer portion (2) according to one of claims 1 to 7 **characterised in that** there is provided a one-piece closure portion (16) at a region of the stop screw (1), that is furthest spaced from the stop buffer portion (2).

9. A combination of a stop screw (1) and a stop buffer portion (2) according to one of the preceding claims with a connecting portion (14) for the stop screw (1), **characterised in that** the connecting portion (14) has at least one latching receiving means (13) for the at least one latching ball (7).

## Revendications

1. Combinaison d'une vis de butée (1) comprenant une partie de tampon de butée (2) qui présente dans une zone située en face de la vis de butée (2) une saillie sensiblement sphérique (2a), la vis de butée (1) présentant dans une zone située en face de la partie de tampon de butée (2) un évidement destiné à recevoir la saillie sensiblement sphérique (2a) de la partie de tampon de butée (2) pour former une liaison articulée entre la vis de butée (1) et la partie de tampon de butée (2), dans laquelle combinaison, pour limiter la liaison articulée entre la vis de butée (1) et la partie de tampon de butée (2), la vis de butée (2) présente une surface d'appui de vis (1a) et la partie de tampon de butée (2) présente une surface d'appui de partie de tampon de butée (2b) située en face de la surface d'appui de vis (1a), **caractérisée en ce que** la vis de butée (1) est pourvue d'un évidement de réception de ressort (4) dans lequel est disposé un élément de ressort (5), **en ce que** la saillie sphérique (2a) présente un logement de bille de roulement (2c) pour une bille intérieure (6), l'élément de ressort (5) étant en appui contre la bille intérieure (6), **en ce que** la vis de butée (2) présente un poussoir coulissant (8) avec un support de ressort (8a) pour l'élément de ressort (5) et au moins une bille d'encliquetage (7), au moins un évidement (9) pour ladite au moins une bille d'encliquetage (7) étant ménagé sur le poussoir coulissant (8) de façon que la bille d'encliquetage (7) puisse être amenée d'une position d'encliquetage, permettant un verrouillage de l'ensemble formant tige, à une position de libération, permettant un déverrouillage de l'ensemble formant tige, et **en ce que** l'élément de ressort (5) disposé entre la bille intérieure (6) et le poussoir (8) forme un élément de rappel destiné à rappeler la partie de tampon de butée (2).

2. Combinaison d'une vis de butée (1) comprenant une partie de tampon de butée (2) selon la revendication 1, **caractérisée en ce que** la surface d'appui de vis (1a) et la surface d'appui de partie de tampon de butée (2b) sont conformées en anneaux.

3. Combinaison d'une vis de butée (1) comprenant une partie de tampon de butée (2) selon la revendication 1 ou 2, **caractérisée en ce qu'**une bague d'étanchéité (3) est disposée entre une zone de col (2d) de la saillie sensiblement sphérique (2a) de la partie de tampon de butée (2) et la vis de butée (1).

4. Combinaison d'une vis de butée (1) avec une partie de tampon de butée (2) selon l'une des revendications 1 à 3, **caractérisée en ce que** l'élément de ressort (5) présente des variations de l'enroulement.

5. Combinaison d'une vis de butée (1) avec une partie de tampon de butée (2) selon l'une des revendications 1 à 4, **caractérisée en ce qu'**un siège de bille cylindrique (10) est disposé autour de la bille de roulement intérieure (6).

6. Combinaison d'une vis de butée (1) avec une partie de tampon de butée (2) selon l'une des revendications 1 à 5, **caractérisée en ce que** le poussoir coulissant (8) présente un tourillon (12).

7. Combinaison d'une vis de butée (1) avec une partie de tampon de butée (2) selon l'une des revendications 1 à 6, **caractérisée en ce que**, dans la position d'encliquetage, la bille d'encliquetage (7) est en appui contre le côté extérieur du logement de ressort (8), lequel côté extérieur est conformé en cône à faible pente.

8. Combinaison d'une vis de butée (1) avec une partie de tampon de butée (2) selon l'une des revendications 1 à 7, **caractérisée en ce que** dans la zone de la vis de butée (1) la plus éloignée de la partie de tampon de butée (2) est prévue une partie terminale d'un seul tenant (16).

9. Combinaison d'une vis de butée (1) et d'une partie de tampon de butée (2) selon l'une des revendications précédentes, comprenant une partie de raccordement (14) pour la vis de butée (1), **caractérisée en ce que** la partie de raccordement (14) présente au moins un logement d'encliquetage (13) pour ladite au moins une bille d'encliquetage (7).
